# EUROPEAN PATENT APPLICATION

(11) **EP 4 664 870 A1**
(43) Date of publication of application: **17.12.2025**
(21) Application number: 25155801.1
(22) Date of filing: 04.02.2025
(51) Int. Cl.: H04N 1/00, G03G 15/00

(54) **APPARATUS AND OPTIONAL UNIT**

(30) Priority: 11.06.2024 JP 2024094561
(71) Applicant: FUJIFILM Business Innovation Corp., Minato-ku Tokyo (JP)
(72) Inventor: SHIBAZAKI, Tomotaka, Yokohama-shi, Kanagawa (JP); HASEGAWA, Norio, Yokohama-shi, Kanagawa (JP); ARAKAWA, Tatsuya, Yokohama-shi, Kanagawa (JP); AKIBA, Hideyuki, Yokohama-shi, Kanagawa (JP); TAJI, Tsutomu, Yokohama-shi, Kanagawa (JP); MORIJIRI, Kenta, Yokohama-shi, Kanagawa (JP); RIKIHISA, Yuta, Yokohama-shi, Kanagawa (JP); ITO, Masataka, Yokohama-shi, Kanagawa (JP); NIZAWA, Yukio, Yokohama-shi, Kanagawa (JP); SHIOI, Mitsunori, Yokohama-shi, Kanagawa (JP); MAKABE, Mayumi, Yokohama-shi, Kanagawa (JP); ITO, Yohei, Yokohama-shi, Kanagawa (JP); KUSHIDA, Ryo, Yokohama-shi, Kanagawa (JP); MATSUMOTO, Shigeyuki, Yokohama-shi, Kanagawa (JP)
(74) Representative: Kurig, Thomas

(57) **Abstract**

An apparatus includes a plurality of optional units attached to an apparatus body, in which the apparatus is configured to identify the plurality of optional units, the apparatus body includes an output section that outputs a power supply voltage generated by the apparatus body, the optional units each include: a power receiving section that receives a first direct-current (DC) voltage; a step-down circuit that steps down the first DC voltage received; a power output section that outputs a second DC voltage obtained by stepping down the first DC voltage by the step-down circuit; and a controller that detects the first DC voltage or the second DC voltage and determines a level number at which a corresponding one of the optional units is attached on a basis of the first DC voltage or the second DC voltage detected, and the optional units include: an optional unit at a first level, connected to the apparatus body; and at least one optional unit provided at a succeeding or higher level of the optional unit at the first level, in which the power receiving section of the optional unit at the first level is connected to the output section of the apparatus body, and the power receiving section of the at least one optional unit is connected to the power output section of one of the optional units, the one provided at a preceding level of the at least one optional unit.

## Description

### Background

### (i) Technical Field

The present disclosure relates to an apparatus and an optional unit.

### (ii) Related Art

Japanese Unexamined Patent Application Publication No. 2004-287121 discloses a method of identifying optional units by sending an identification pulse signal from a main control unit of an apparatus body to a sub-control unit of a subsequent optional unit.

Japanese Unexamined Patent Application Publication No. 2014-193546 discloses an image forming apparatus in which a body control unit of an apparatus body outputs a predetermined signal during initial communication, and each optional control unit of each optional unit determines the attachment position of its own sheet feeder on the basis of a voltage value of the input predetermined signal.

### Summary

In an apparatus including an apparatus body and a plurality of optional units for expanding or adding functions, a so-called level number detecting process is required to assign identification numbers to respective optional units with the same configuration for the startup of the entire apparatus. In the related art, the level number detecting process is performed by outputting a signal for level number detection to an optional unit after the apparatus body starts up. In order to perform the level number detecting process, it is necessary to wait for the apparatus body to start up, and it takes time for the optional units to be assigned with identification numbers and for the entire apparatus, including the optional units, to start up.

Accordingly, it is an object of the present disclosure to shorten the time required for the startup of the entire apparatus, including the optional units, compared to a case where the apparatus body outputs a signal for level number detection to an optional unit.

According to a first aspect of the present disclosure, there is provided an apparatus including a plurality of optional units attached to an apparatus body, in which the apparatus is configured to identify the plurality of optional units, the apparatus body includes an output section that outputs a power supply voltage generated by the apparatus body, the optional units each include: a power receiving section that receives a first direct-current (DC) voltage; a step-down circuit that steps down the first DC voltage received; a power output section that outputs a second DC voltage obtained by stepping down the first DC voltage by the step-down circuit; and a controller that detects the first DC voltage or the second DC voltage and determines a level number at which a corresponding one of the optional units is attached on a basis of the first DC voltage or the second DC voltage detected, and the optional units include: an optional unit at a first level, connected to the apparatus body; and at least one optional unit provided at a succeeding or higher level of the optional unit at the first level, in which the power receiving section of the optional unit at the first level is connected to the output section of the apparatus body, and the power receiving section of the at least one optional unit is connected to the power output section of one of the optional units, the one provided at a preceding level of the at least one optional unit.

According to a second aspect of the present disclosure, in the apparatus according to the first aspect, the step-down circuit may include a diode and steps down the first DC voltage by a forward voltage.

According to a third aspect of the present disclosure, in the apparatus according to the second aspect, the step-down circuit may include a series circuit of the diode, one end of which is connected to the power receiving section, and a resistor, one end of which is connected to a ground, and a connection point between the diode and the resistor may be connected to the power output section.

According to a fourth aspect of the present disclosure, in the apparatus according to the first aspect, the controller of each of the optional units may determine a level number at which a corresponding one of the optional units is attached by comparing the first DC voltage or the second DC voltage detected with a predetermined voltage range.

According to a fifth aspect of the present disclosure, there are provided a plurality of optional units attached to an apparatus body, the units each including: a power receiving section that receives a first direct-current (DC) voltage; a step-down circuit that steps down the first DC voltage received; a power output section that outputs a second DC voltage obtained by stepping down the first DC voltage by the step-down circuit; and a controller that detects the first DC voltage or the second DC voltage and determines a level number at which a corresponding one of the optional units is attached on a basis of the first DC voltage or the second DC voltage detected.

According to the first and fifth aspects of the present disclosure, the time required for the startup of the entire apparatus, including the optional units, can be shortened compared to a case where the apparatus body outputs a signal for level number detection to the optional units.

According to the second aspect of the present disclosure, a substrate which is each of the optional units can be configured to no longer require a termination component.

According to the third aspect of the present disclosure, the voltage value that is stepped down and the variation in the voltage value that is stepped down can be controlled by the type of the diode and the constant of the resistor.

According to the fourth aspect of the present disclosure, the voltage value detected by each of the optional units can have a range.

### Brief Description of the Drawings

Exemplary embodiments of the present disclosure will be described in detail based on the following figures, wherein:
Fig. 1 is a view illustrating an exemplary configuration of an image forming apparatus to which the present exemplary embodiment is applied;
Fig. 2 is a view illustrating a connection state between an apparatus body and sheet feeders;
Fig. 3 is a view illustrating an example of a step-down circuit provided on each optional substrate;
Fig. 4 is a table illustrating an example of relationships between level numbers at which the sheet feeders are attached and ranges of voltage input to computers provided in the sheet feeders;
Fig. 5 is a view illustrating an example of voltage states of a body substrate and a plurality of optional substrates provided;
Figs. 6A and 6B are arrow diagrams each illustrating a flow of a level number detecting process in the image forming apparatus, where Fig. 6A is an arrow diagram illustrating a comparative example to which the present exemplary embodiment is not applied, and Fig. 6B is an arrow diagram illustrating an example of a case to which the present exemplary embodiment is applied; and
Fig. 7 is a view illustrating an example of a step-down circuit that steps down a voltage by resistive voltage division.

### Detailed Description

Hereinafter, an exemplary embodiment of the present disclosure will be described in detail with reference to the accompanying drawings. In the following description, an example in which the present disclosure is applied to an image forming apparatus is used to describe an example of an apparatus that includes a plurality of optional units attached to an apparatus body and identifies the plurality of optional units. Note that the image forming apparatus is an example, and the present disclosure may also be applied to other apparatuses that include a plurality of optional units with the same configuration and are required to identify the optional units at the startup of the apparatus.

### <Configuration of image forming apparatus>

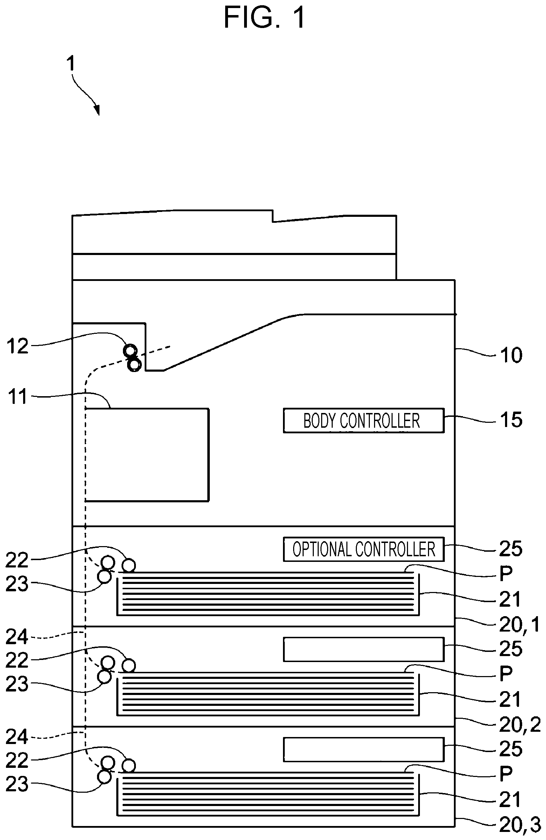

Fig. 1 is a view illustrating an exemplary configuration of an image forming apparatus 1 to which the present exemplary embodiment is applied.

The image forming apparatus 1 is an apparatus that forms an image on a recording medium, such as a sheet P, for example, using an electrophotographic method or the like. The image forming apparatus 1 according to the present exemplary embodiment is an example of an apparatus.

The image forming apparatus 1 includes an apparatus body 10 and sheet feeders 20 that are examples of optional units attached to the apparatus body 10. The image forming apparatus 1 illustrated in Fig. 1 includes, for example, three sheet feeders 20. A plurality of the sheet feeders 20 attached are configured identically.

The apparatus body 10 forms an image on a sheet P. The apparatus body 10 includes an image forming section 11 that forms an image on a sheet P and a discharge roller 12 that discharges the sheet P on which the image is formed. In addition, the apparatus body 10 includes a body controller 15 that controls an operation of the image forming apparatus 1.

The image forming section 11 forms an image on a sheet P transported from the sheet feeder 20. The image forming section 11 forms an image by, for example, transferring toner held on a photoreceptor onto the sheet P by the electrophotographic method. Alternatively, the image forming section 11 may form an image by ejecting ink onto the sheet P by an inkjet method.

The body controller 15 controls the operation of the image forming apparatus 1. For example, the body controller 15 controls an operation such as an image forming process in the apparatus body 10.

In addition, the body controller 15 transmits a control signal relating to control of operations of the sheet feeders 20 to optional controllers 25. Each sheet feeder 20 includes one of the optional controllers 25, and the optional controller 25 controls the operation of the corresponding sheet feeder 20.

Functions of the body controller 15 are realized by a computer, for example.

The sheet feeder 20 accommodates sheets P, and feeds the sheets P to the apparatus body 10. A plurality of the sheet feeders 20 are attached to the apparatus body 10. In the example illustrated in Fig. 1, the image forming apparatus 1 includes the sheet feeders 20 in three levels at the lower portion thereof. The sheet feeder 20 can be added one level at a time.

The sheet feeder 20 includes a sheet feeding cassette 21 that accommodates sheets P, and a sheet feeding roller 22 that feeds the sheets P one by one from the sheet feeding cassette 21. In addition, the sheet feeder 20 includes a transport roller 23 that transports the fed sheets P to the apparatus body 10.

The sheet feeding cassettes 21 of each of a plurality of the sheet feeders 20 each accommodate sheets P of any size and type, with different sheet feeding cassettes 21 accommodating sheets P of different sizes and types, for example. Each sheet P fed from the sheet feeding cassettes 21 of the plurality of sheet feeders 20 is transported via a transport path 24 to the image forming section 11 of the apparatus body 10.

The optional controller 25 controls the operation of the sheet feeder 20. In addition, the optional controller 25 determines the attachment position of its own sheet feeder 20 among the plurality of sheet feeders 20 attached to the apparatus body 10. In the following description, attachment positions are sometimes referred to as "level numbers". In addition, the level numbers at which the plurality of sheet feeders 20 are attached to the apparatus body 10 are sometimes referred to as "first level, second level, ..." in order from the first level, which is the uppermost level. In Fig. 1, the sheet feeder 20 at the first level is denoted as 20(1), the sheet feeder 20 at the second level is denoted as 20(2), and the sheet feeder 20 at the third level is denoted as 20(3).

Functions of the optional controller 25 are realized by a computer, for example.

### <Connection state between apparatus body and sheet feeders>

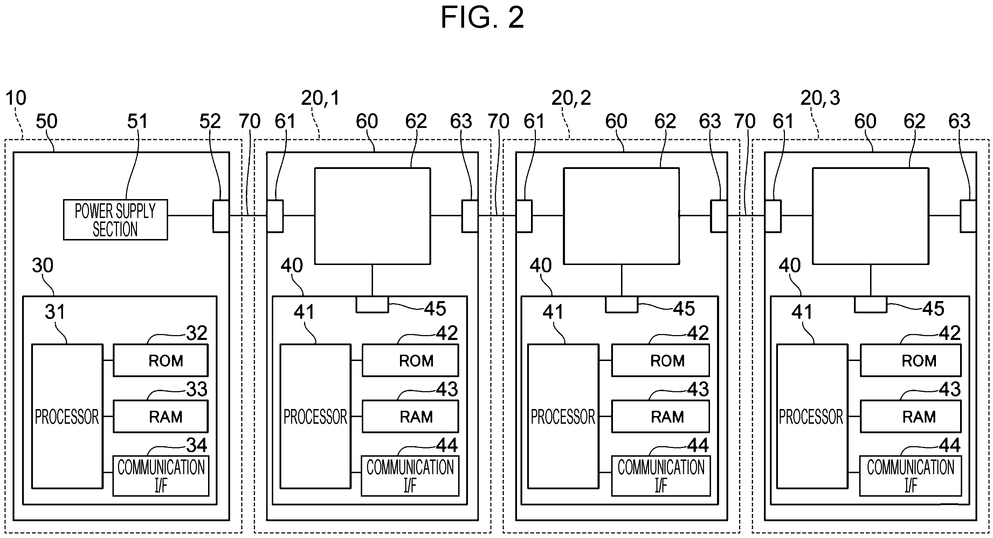

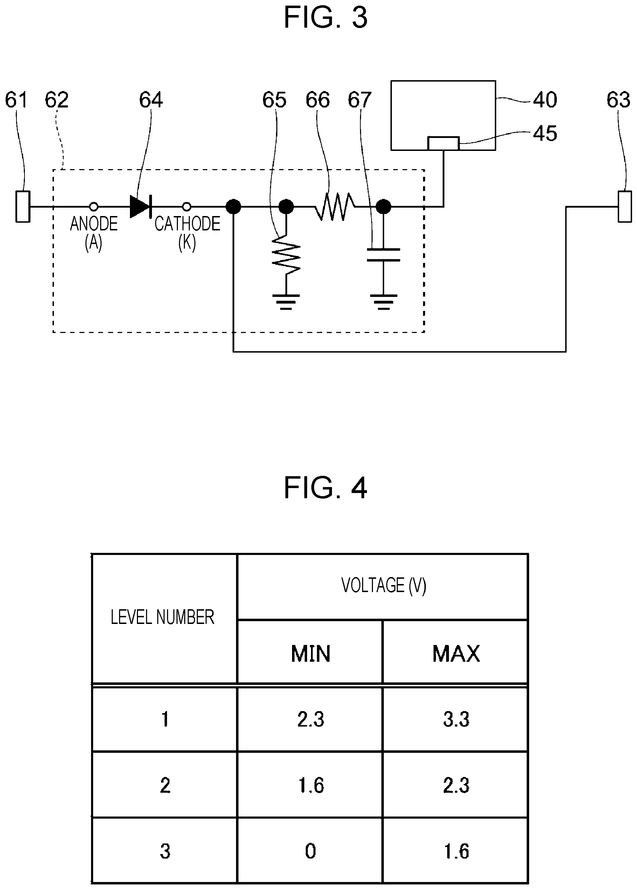

A connection state between the apparatus body and the sheet feeders will be described with reference to Figs. 2 and 3.

Fig. 2 is a view illustrating a connection state between the apparatus body 10 and the sheet feeders 20. Fig. 2 is a view illustrating a connection state between a body substrate 50 and optional substrates 60. The body substrate 50 is provided in the body controller 15 (see Fig. 1) of the apparatus body 10. The optional substrates 60 are each provided in the optional controller 25 (see Fig. 1) of a corresponding one of the sheet feeders 20. The body substrate 50 and the optional substrates 60 are connected via connectors 70. In Fig. 2, similar to the image forming apparatus 1 in Fig. 1, the apparatus body 10 and three sheet feeders 20 are included.

Fig. 3 is a view illustrating an example of a step-down circuit 62 provided on each optional substrate 60 (see Fig. 2).

The body substrate 50 includes a computer 30 that realizes the functions of the body controller 15, a power supply section 51 that generates a power supply voltage, and a power output terminal 52 that outputs the power supply voltage. The power output terminal 52 is an example of an output section.

The computer 30 includes a processor 31, a read only memory (ROM) 32, a random access memory (RAM) 33, and a communication interface 34 (denoted as communication I/F 34 in Fig. 2, the same applies hereinafter). The processor 31 is a central processing unit (CPU), for example. The ROM 32 is a non-volatile memory that stores a program executed by the processor 31 and other data. The RAM 33 is a volatile memory used as a work area when the processor 31 executes the program. The processor 31 uses the RAM 33 as a work area and executes the program read from the ROM 32.

The communication interface 34 is connected to communication interfaces 44 of computers 40 provided on the optional substrates 60 via, for example, signal lines. The processor 31 transmits a control signal relating to, for example, control of the operations of the sheet feeders 20 to the optional controllers 25 via the communication interface 34. As will be described in detail below, in the present exemplary embodiment, the level number detection is not performed on the basis of the control signal via the communication interface 34.

The power supply section 51 generates a power supply voltage. When the switch of the image forming apparatus 1 is turned to an on state, a power supply voltage is generated by the power supply section 51 and is output to a power receiving terminal 61, which will be described later, of the optional substrate 60 via the power output terminal 52.

The power output terminal 52 outputs the power supply voltage generated by the power supply section 51. The power output terminal 52 of the body substrate 50 is connected to the power receiving terminal 61 of the optional substrate 60 via the connector 70.

The optional substrate 60 includes the computer 40 that realizes the functions of the optional controller 25. In addition, the optional substrate 60 includes the power receiving terminal 61 that receives a direct-current (DC) voltage, the step-down circuit 62 that steps down the DC voltage received by the power receiving terminal 61, and a power output terminal 63 that outputs the DC voltage stepped down by the step-down circuit 62. The power receiving terminal 61 is an example of a power receiving section, and the power output terminal 63 is an example of a power output section.

The computer 40 includes a processor 41, a read only memory (ROM) 42, a random access memory (RAM) 43, the communication interface 44, and an input terminal 45. The processor 41 is a central processing unit (CPU), for example. The processor 41 uses the RAM 43 as a work area and executes a program read from the ROM 42.

For example, the processor 41 executes a level number detecting process that detects a voltage and determines the level number at which its own sheet feeder 20 is attached. Details of the level number detecting process will be described later.

The communication interface 44 is connected to the communication interface 34 of the computer 30 provided on the body substrate 50 via, for example, a signal line. The processor 41 acquires a control signal from the body controller 15 via the communication interface 44. The processor 41 controls the operation of its own sheet feeder 20 in accordance with the acquired control signal.

The input terminal 45 receives the DC voltage input to the computer 40.

The power receiving terminal 61 is connected to another substrate via the connector 70, and receives a DC voltage. In a case where the sheet feeder 20 provided with the optional substrate 60 is at the first level, the power receiving terminal 61 is connected to the power output terminal 52 of the body substrate 50, and receives the power supply voltage output from the power output terminal 52. In a case where the sheet feeder 20 provided with the optional substrate 60 is at the second level or higher, the power receiving terminal 61 is connected to the power output terminal 63 of the optional substrate 60 of a preceding sheet feeder 20, and receives the DC voltage output from the power output terminal 63.

The step-down circuit 62 is a circuit that steps down the DC voltage received by the power receiving terminal 61.

Fig. 3 is a view illustrating an example of the step-down circuit 62 provided on each optional substrate 60 (see Fig. 2). The step-down circuit 62 includes a diode 64, and steps down the voltage by a forward voltage of the diode 64.

The step-down circuit 62 illustrated in Fig. 3 includes the diode 64, a first resistor 65, a second resistor 66, and a capacitor 67.

The diode 64 is, for example, a pn-junction diode formed by joining a p-type semiconductor and an n-type semiconductor. The pn-junction diode has a rectifying characteristic that allows current to pass in a forward direction from a p-type anode (A) to an n-type cathode (K), and blocks current from flowing in a reverse direction. The diode 64 generates a forward voltage between the anode (A) and the cathode (K) when current flows in the forward direction. In other words, a voltage is stepped down by allowing current to flow through the diode 64. In the following description, the diode 64 is assumed to be a silicon pn-junction diode with a forward voltage of approximately from 0.6 V to 0.7 V. Note that the forward voltage varies depending on the current flowing through the diode 64. In the diode 64, the anode (A) is connected to the power receiving terminal 61 and the cathode (K) is connected to the power output terminal 63.

The first resistor 65 has one end connected to a ground and the other end connected to the cathode (K) of the diode 64. A forward current flows from the power receiving terminal 61 through the diode 64 and the first resistor 65 toward the ground. This forward current generates a forward voltage in the diode 64. The first resistor 65 has a predetermined electrical resistance, which adjusts the value of the current flowing through the diode 64. The diode 64 and the first resistor 65 are connected in series.

The second resistor 66 is connected between the diode 64 and the computer 40. The cathode (K) of the diode 64 is connected to the computer 40 via the second resistor 66. The voltage at the cathode (K) of the diode 64, that is, the voltage stepped down by the forward voltage of the diode 64, is supplied to the input terminal 45 of the computer 40. Note that the second resistor 66 prevents excessive current from flowing through the step-down circuit 62.

The capacitor 67 has one end connected to the ground and the other end connected between the diode 64 and the computer 40. The capacitor 67 suppresses fluctuations in the voltage supplied to the computer 40. Note that the step-down circuit 62 may be configured without either or both of the second resistor 66 and the capacitor 67.

In the example illustrated in Fig. 3, the step-down circuit 62 includes the diode 64, and the voltage is stepped down by the forward voltage of the diode 64. The diode 64 blocks the current from flowing in the reverse direction. Therefore, by including the diode 64, the step-down circuit 62 provided on each of the plurality of optional substrates 60 (see Fig. 2) is electrically isolated with no backflow of the current. From this, the optional substrate 60 does not require a termination component, leading to a reduction in the cost associated with the optional substrate 60. In addition, the sheet feeder 20 including the optional substrate 60 is prevented from becoming larger.

In the example illustrated in Fig. 3, the DC voltage (first DC voltage) received by the power receiving terminal 61 is supplied to the anode (A) of the diode 64. The voltage at the cathode (K) of the diode 64 becomes a DC voltage (second DC voltage) obtained by stepping down the DC voltage received by the power receiving terminal 61 by the forward voltage of the diode 64. The power output terminal 63 outputs the DC voltage (second DC voltage) obtained by stepping down the DC voltage received by the power receiving terminal 61 by the forward voltage of the diode 64. The DC voltage (second DC voltage) obtained by stepping down the DC voltage received by the power receiving terminal 61 by the forward voltage of the diode 64 is supplied to the input terminal 45 of the computer 40 via the second resistor 66.

As illustrated in Fig. 2, the power output terminal 63 of the optional substrate 60 outputs a DC voltage stepped down by the step-down circuit 62. The power output terminal 63 of the optional substrate 60 is connected to the power receiving terminal 61 of the subsequent optional substrate 60 via the connector 70.

As illustrated in Fig. 2, the power receiving terminal 61 of the optional substrate 60 at the first level connected to the apparatus body 10 is connected to the power output terminal 52 of the body substrate 50. The power receiving terminal 61 of the optional substrate 60 provided at the second level or higher is connected to the power output terminal 63 of the preceding optional substrate 60. In the present exemplary embodiment, the body substrate 50 and the plurality of optional substrates 60 are connected in a chain. The number of paths required for the level number detecting process is one. In other words, the optional substrate 60 is downsized.

### <Level number detecting process>

The level number detecting process in the image forming apparatus 1 will be described with reference to Figs. 2 to 5. Here, an example will be described in which a forward voltage of the diode 64 is approximately from 0.6 V to 0.7 V, and a power supply voltage of 3.3 V is generated in the power supply section 51.

Fig. 4 is a table illustrating an example of relationships between level numbers at which the sheet feeders 20 are attached and ranges of voltage input to the computers 40 provided in the sheet feeders 20. For example, in a case where the voltage input to the input terminal 45 of the computer 40 is within a range of from 2.3 V to 3.3 V, the computer 40 determines that its own sheet feeder 20 is at the first level. The data of the relational values illustrated in Fig. 4 is stored in the ROM 42 of the computer 40, for example.

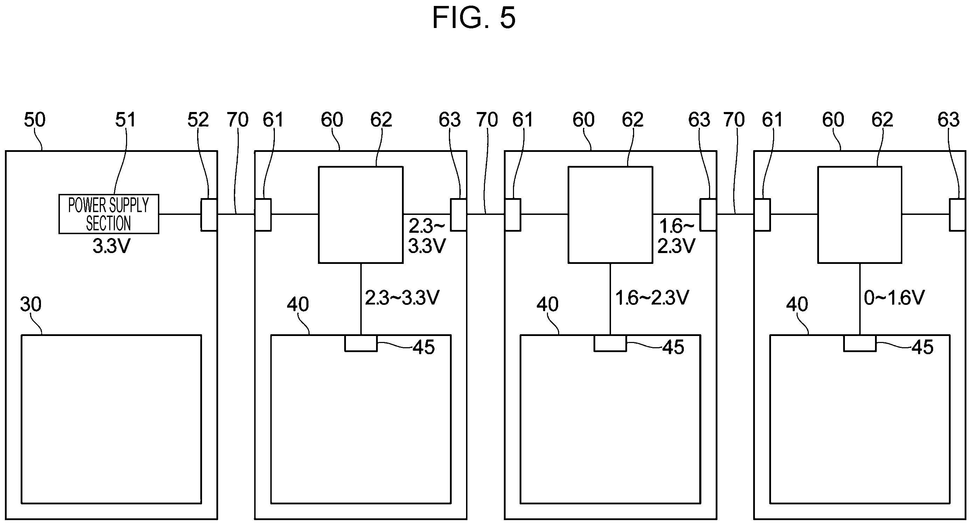

Fig. 5 is a view illustrating an example of voltage states of the body substrate 50 and the plurality of optional substrates 60 provided.

A DC voltage of from 2.3 V to 3.3 V is supplied to the input terminal 45 of the computer 40 provided on the optional substrate 60 at the first level. A DC voltage of from 1.6 V to 2.3 V is supplied to the input terminal 45 of the computer 40 provided on the optional substrate 60 at the second level. A DC voltage of from 0 V to 1.6 V is supplied to the input terminal 45 of the computer 40 provided on the optional substrate 60 at the third level.

A power supply voltage generated in the power supply section 51 of the body substrate 50 is output as a DC voltage from the power output terminal 52. The output DC voltage is received by the power receiving terminal 61 of the optional substrate 60 at the first level, and the received DC voltage is stepped down by the step-down circuit 62. The DC voltage stepped down by the step-down circuit 62 is input to the input terminal 45 of the computer 40 provided on the optional substrate 60 at the first level. The computer 40 detects the input DC voltage, and determines the level number at which its own sheet feeder 20 is attached by comparing the voltage with the ranges of the voltage stored in the ROM 42.

For example, in a case where a voltage value by which the step-down circuit 62 steps down is 0.7 V, a DC voltage of 2.6 V is input to the input terminal 45 of the computer 40 provided on the optional substrate 60 at the first level. In this case, the computer 40 determines that its own sheet feeder 20 is at the first level by comparing the input DC voltage with the ranges of the voltage illustrated in Fig. 4.

As described above, in the present exemplary embodiment, the computer 40 determines the level number at which its own sheet feeder 20 is attached by comparing the detected voltage with the predetermined voltage ranges.

In addition, the DC voltage stepped down by the step-down circuit 62 of the optional substrate 60 at the first level is output from the power output terminal 63. The DC voltage output from the power output terminal 63 is received by the power receiving terminal 61 of the optional substrate 60 at the second level. The received DC voltage is stepped down by the step-down circuit 62, and is input to the input terminal 45 of the computer 40 provided on the optional substrate 60 at the second level. The computer 40 detects the input DC voltage, and determines the level number at which its own sheet feeder 20 is attached by comparing the voltage with the ranges of the voltage stored in the ROM 42.

For example, in a case where the DC voltage at the power receiving terminal 61 is 2.6 V and a voltage value by which the step-down circuit 62 steps down is 0.68 V, a DC voltage of 1.92 V is input to the input terminal 45 of the computer 40. In this case, the computer 40 determines that its own sheet feeder 20 is at the second level by comparing the input DC voltage with the ranges of the voltage illustrated in Fig. 4.

The DC voltage stepped down by the step-down circuit 62 of the optional substrate 60 at the second level is output from the power output terminal 63 and is received by the power receiving terminal 61 of the optional substrate 60 at the third level. A similar level number detecting process is also performed in the optional substrate 60 at the third level.

In the example illustrated in Fig. 4, it is not possible to determine the level numbers in a case where the sheet feeders 20 are attached to the apparatus body 10 in four or more levels. However, by adjusting the voltage value by which the step-down circuit 62 steps down, or by adjusting the DC voltage output by the apparatus body 10 to the sheet feeder 20 at the first level, it becomes possible to determine the level numbers even in the case where the sheet feeders 20 are attached in four or more levels.

For example, consider a case where the step-down circuit 62 includes the diode 64 as illustrated in Fig. 3. In this case, by changing the type of the diode 64 or the resistance value of the first resistor 65, a value by which the voltage is stepped down at the diode 64 can be adjusted to be smaller.

Note that in the above description, the computer 40 detects the DC voltage after the DC voltage is stepped down by the step-down circuit 62, but the present exemplary embodiment is not limited thereto. The computer 40 may detect the DC voltage before the DC voltage is stepped down by the step-down circuit 62.

For example, the computer 40 may be connected between the power receiving terminal 61 and the diode 64. In this case, the DC voltage (first DC voltage) before the DC voltage is stepped down by the step-down circuit 62 is input to the input terminal 45 of the computer 40. The DC voltage output from the power output terminal 52 of the body substrate 50 is directly input to the computer 40 of the optional substrate 60 at the first level. The DC voltage stepped down by the step-down circuit 62 of the preceding optional substrate 60 is input to the computer 40 of the optional substrate 60 at the second level or higher.

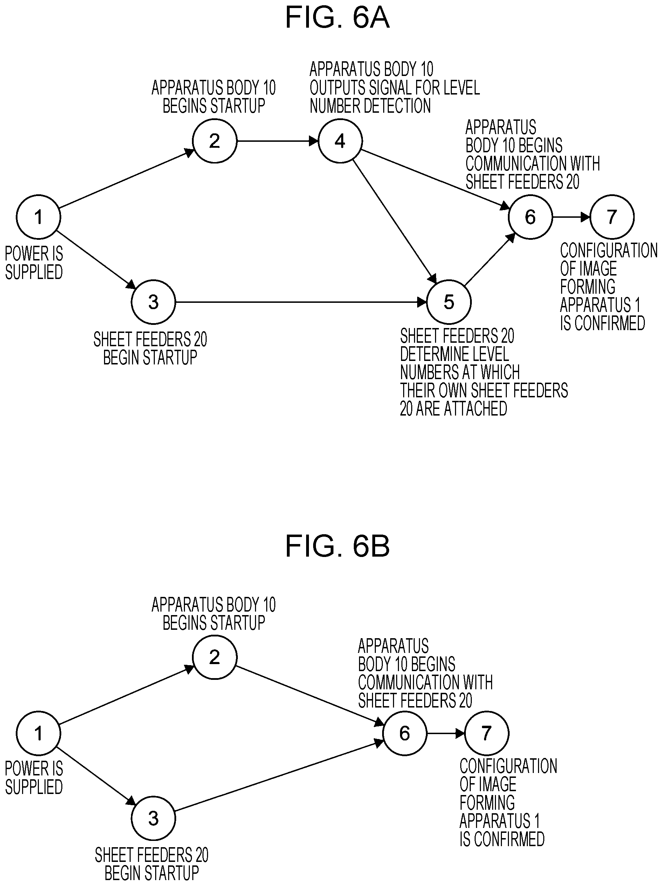

Figs. 6A and 6B are arrow diagrams each illustrating a flow of a level number detecting process in the image forming apparatus 1, where Fig. 6A is an arrow diagram illustrating a comparative example to which the present exemplary embodiment is not applied, and Fig. 6B is an arrow diagram illustrating an example of a case to which the present exemplary embodiment is applied.

The arrow diagram illustrated in Fig. 6A illustrates an example of a flow of the level number detecting process in a case where the computer 30 of the apparatus body 10 outputs a signal for level number detection.

In Fig. 6A, first, power is supplied to the image forming apparatus 1 (step 1, denoted by a circled number in Fig. 6A, the same applies hereinafter). When the switch of the image forming apparatus 1 is turned to an on state, a power supply voltage is generated in the power supply section 51.

Next, the apparatus body 10 begins startup (step 2). Power is supplied to the computer 30 of the apparatus body 10, software starts, and an initialization process begins. Then, the apparatus body 10 outputs a signal for level number detection (step 4). In the example illustrated in Fig. 6A, the computer 30 of the apparatus body 10 outputs the signal for level number detection to the sheet feeder 20 at the first level.

In addition, when power is supplied to the image forming apparatus 1 in step 1, each sheet feeder 20 begins startup (step 3). Power is supplied to the computer 40 of the sheet feeder 20, software starts, and an initialization process begins. The initialization process in the computer 40 is completed earlier than that in the apparatus body 10 due to the fewer processes compared to that in the computer 30 of the apparatus body 10.

Next, the sheet feeders 20 determine the level numbers at which their own sheet feeders 20 are attached (step 5). The computer 40 of the sheet feeder 20 attached at the first level receives the signal output in step 4 by the apparatus body 10, and determines that its own sheet feeder 20 is at the first level. Then, the computer 40 stores the level number at which its own sheet feeder 20 is attached in the ROM 42, for example. Thereafter, the computer 40 outputs the signal for level number detection to the sheet feeder 20 at the second level. This process from receiving the signal to sending the signal is repeated for the number of levels of the sheet feeders 20 attached to the apparatus body 10.

Next, the apparatus body 10 begins communication with the sheet feeders 20 (step 6). The apparatus body 10 begins the communication after all of the sheet feeders 20 attached to the apparatus body 10 determine the level numbers at which their own sheet feeders 20 are attached. Then, the configuration of the image forming apparatus 1 is confirmed (step 7). The apparatus body 10 can then begin the image forming process and other operations.

In the related art, the level number detecting process is performed by the process illustrated in Fig. 6A, for example. In the related art, after the computer 30 of the apparatus body 10 starts up, it is necessary for the computer 30 to output a signal for level number detection to the sheet feeder 20. In this case, the level number detecting process cannot begin unless the computer 30 starts up. In addition, the level number detection has to be sequentially executed for each of the plurality of sheet feeders 20 attached, one level at a time. Therefore, the time required for the entire apparatus to start up becomes longer.

On the other hand, in a case where the present exemplary embodiment is applied, the level number detecting process is executed without the computer 30 of the apparatus body 10 outputting a signal for level number detection. Therefore, in the present exemplary embodiment, the level number detecting process can be executed without waiting for the startup of the computer 30. An example of the flow of the level number detecting process in a case to which the present exemplary embodiment is applied will be described with reference to Fig. 6B.

In Fig. 6B, first, power is supplied to the image forming apparatus 1 (step 1). When the switch of the image forming apparatus 1 is turned to an on state, a power supply voltage is generated in the power supply section 51. Then, the power supply voltage is output from the power output terminal 52 to the optional substrate 60.

Then, the apparatus body 10 begins startup (step 2). In addition, when power is supplied to the image forming apparatus 1 in step 1, each sheet feeder 20 begins startup (step 3). In the present exemplary embodiment, the computer 40 of the sheet feeder 20 starting up in step 3 determines the level number at which its own sheet feeder 20 is attached.

Next, the apparatus body 10 begins communication with the sheet feeders 20 (step 6). The apparatus body 10 begins the communication after all of the sheet feeders 20 attached to the apparatus body 10 determine the level numbers at which their own sheet feeders 20 are attached. Then, the configuration of the image forming apparatus 1 is confirmed (step 7). The apparatus body 10 can then begin the image forming process and other operations.

In the present exemplary embodiment, the computer 40 of the sheet feeder 20 can determine the level number at which its own sheet feeder 20 is attached by utilizing the power supply voltage generated by the power supply section 51 of the apparatus body 10. Therefore, as illustrated in Fig. 6B, processes in steps 4 and 5 can be omitted. The level number detecting process can be executed without waiting for the startup of the computer 30 of the apparatus body 10. As a result, the time required for the entire image forming apparatus 1 to start up can be shortened.

Note that the step-down circuit 62 is not limited to one including the diode 64 illustrated in Fig. 3. The step-down circuit 62 may step down a voltage by resistive voltage division, for example.

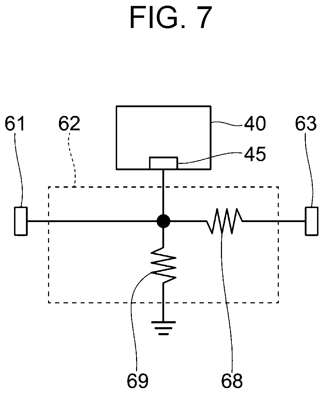

Fig. 7 is a view illustrating an example of the step-down circuit 62 that steps down a voltage by resistive voltage division.

In the example illustrated in Fig. 7, the step-down circuit 62 includes a first resistor 68 and a second resistor 69. The first resistor 68 and the second resistor 69 are each an example of a resistor.

In the step-down circuit 62, the power receiving terminal 61 is connected to the input terminal 45 of the computer 40. The first resistor 68 has one end connected to the power receiving terminal 61 and the other end connected to the power output terminal 63. The second resistor 69 has one end connected to the ground and the other end connected to the power receiving terminal 61. In other words, a connection point between the first resistor 68 and the second resistor 69 is connected to the computer 40.

In a case where the sheet feeder 20 provided with the optional substrate 60 (see Fig. 2) is at the first level, the DC voltage output from the power output terminal 52 of the body substrate 50 is directly input to the computer 40.

In a case where the sheet feeder 20 provided with the optional substrate 60 is at the second level or higher, a stepped down voltage is input to the computer 40. In this case, a voltage obtained by resistive voltage division with the second resistor 69 and the first resistor 68, which is included in the optional substrate 60 of a preceding sheet feeder 20, is input to the computer 40. As described above, in the step-down circuit 62 in the example illustrated in Fig. 7, the voltage received by the power receiving terminal 61 is stepped down by resistive voltage division with the first resistor 68 and the second resistor 69.

Note that the step-down circuit 62 may be configured such that the first resistor 68 is connected between the power receiving terminal 61 and the computer 40.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An apparatus comprising:
   a plurality of optional units attached to an apparatus body, wherein
   the apparatus is configured to identify the plurality of optional units,
   the apparatus body includes an output section that outputs a power supply voltage generated by the apparatus body,
   the optional units each include:
      a power receiving section that receives a first direct-current (DC) voltage;
      a step-down circuit that steps down the first DC voltage received;
      a power output section that outputs a second DC voltage obtained by stepping down the first DC voltage by the step-down circuit; and
      a controller that detects the first DC voltage or the second DC voltage and determines a level number at which a corresponding one of the optional units is attached on a basis of the first DC voltage or the second DC voltage detected, and
   the optional units include:
      an optional unit at a first level, connected to the apparatus body; and
      at least one optional unit provided at a succeeding or higher level of the optional unit at the first level, wherein
      the power receiving section of the optional unit at the first level is connected to the output section of the apparatus body, and
      the power receiving section of the at least one optional unit is connected to the power output section of one of the optional units, the one provided at a preceding level of the at least one optional unit.
(((2))) The apparatus according to (((1))), wherein the step-down circuit includes a diode and steps down the first DC voltage by a forward voltage.
(((3))) The apparatus according to (((2))), wherein the step-down circuit includes a series circuit of the diode, one end of which is connected to the power receiving section, and a resistor, one end of which is connected to a ground, and a connection point between the diode and the resistor is connected to the power output section.
(((4))) The apparatus according to (((1))), wherein the controller of each of the optional units determines a level number at which a corresponding one of the optional units is attached by comparing the first DC voltage or the second DC voltage detected with a predetermined voltage range.
(((5))) A plurality of optional units attached to an apparatus body, the units each comprising:
   a power receiving section that receives a first direct-current (DC) voltage;
   a step-down circuit that steps down the first DC voltage received;
   a power output section that outputs a second DC voltage obtained by stepping down the first DC voltage by the step-down circuit; and
   a controller that detects the first DC voltage or the second DC voltage and determines a level number at which a corresponding one of the optional units is attached on a basis of the first DC voltage or the second DC voltage detected.

According to (((1))) and (((5))) of the present disclosure, the time required for the startup of the entire apparatus, including the optional units, can be shortened compared to a case where the apparatus body outputs a signal for level number detection to the optional units.

According to (((2))) of the present disclosure, a substrate which is each of the optional units can be configured to no longer require a termination component.

According to (((3))) of the present disclosure, the voltage value that is stepped down and the variation in the voltage value that is stepped down can be controlled by the type of the diode and the constant of the resistor.

According to (((4))) of the present disclosure, the voltage value detected by each of the optional units can have a range.

## Claims

1. An apparatus comprising:
a plurality of optional units attached to an apparatus body, wherein
the apparatus is configured to identify the plurality of optional units,
the apparatus body includes an output section that outputs a power supply voltage generated by the apparatus body,
the optional units each include:
a power receiving section that receives a first direct-current (DC) voltage;
a step-down circuit that steps down the first DC voltage received;
a power output section that outputs a second DC voltage obtained by stepping down the first DC voltage by the step-down circuit; and
a controller that detects the first DC voltage or the second DC voltage and determines a level number at which a corresponding one of the optional units is attached on a basis of the first DC voltage or the second DC voltage detected, and
the optional units include:
an optional unit at a first level, connected to the apparatus body; and
at least one optional unit provided at a succeeding or higher level of the optional unit at the first level, wherein
the power receiving section of the optional unit at the first level is connected to the output section of the apparatus body, and
the power receiving section of the at least one optional unit is connected to the power output section of one of the optional units, the one provided at a preceding level of the at least one optional unit.

2. The apparatus according to claim 1, wherein the step-down circuit includes a diode and steps down the first DC voltage by a forward voltage.

3. The apparatus according to claim 2, wherein the step-down circuit includes a series circuit of the diode, one end of which is connected to the power receiving section, and a resistor, one end of which is connected to a ground, and a connection point between the diode and the resistor is connected to the power output section.

4. The apparatus according to claim 1, wherein the controller of each of the optional units determines a level number at which a corresponding one of the optional units is attached by comparing the first DC voltage or the second DC voltage detected with a predetermined voltage range.

5. A plurality of optional units attached to an apparatus body, the units each comprising:
a power receiving section that receives a first direct-current (DC) voltage;
a step-down circuit that steps down the first DC voltage received;
a power output section that outputs a second DC voltage obtained by stepping down the first DC voltage by the step-down circuit; and
a controller that detects the first DC voltage or the second DC voltage and determines a level number at which a corresponding one of the optional units is attached on a basis of the first DC voltage or the second DC voltage detected.
